# EUROPEAN PATENT SPECIFICATION

(11) **EP 1 825 028 B1**
(45) Date of publication and mention of the grant of the patent: **15.06.2011**
(21) Application number: 05803533.8
(22) Date of filing: 02.11.2005
(51) Int. Cl.: C25B 15/08

(54) **ELECTROLYSIS CELL ELECTROLYTE PUMPING SYSTEM**
PUMPSYSTEM FÜR ELEKTROLYSEZELLENELEKTROLYT
SYSTÈME DE POMPAGE D'ÉLECTROLYTE PAR CELLULE ÉLECTROLYTIQUE

(30) Priority: 02.11.2004 US 522737 P; 13.05.2005 US 594869 P
(43) Date of publication of application: 29.08.2007
(73) Proprietor: Hy-Drive Technologies Ltd, Mississauga, Ontario L5N 2L8 (CA); Gaskatel GMBH, D-34127 Kassel (DE)
(72) Inventor: HELMKE, Joachim, D-34379 Calden (DE); SAUER, Gerhard, D-34127 Kassel (DE)
(74) Representative: Williams, Ceili
(86) International application number: PCT/CA2005/001684
(87) International publication number: WO 2006/047876

(56) References cited:
- CA-A1- 2 130 911
- CA-A1- 2 174 545
- CA-A1- 2 376 830
- JP-A- 9 157 878
- US-A1- 2004 226 873
- PERRY R.H., GREEN D.W.: 'Perry's Chemical Engineers Handbook (7th Edition)', 1997, MCGRAW-HILL pages 10 - 35, XP008118098

## Description

### FIELD OF THE INVENTION

The present invention relates to a system for pumping electrolyte through an electrolysis cell.

### BACKGROUND OF THE INVENTION

Electrolysis cells use electrical energy to generate reaction gases by splitting a compound of an electrolyte. Due to the chemical reaction of electrolysis, the concentration of the electrolyte constantly increases. Electrolysis cells work properly within a limited range of electrolyte concentration. If the concentration is too low, the electrical resistance of the electrolyte becomes too high and the efficiency of the electrolysis cell goes down. Alternately, if the electrolyte concentration is too high, the electrolyte becomes very corrosive and the electrolysis cell might be irreversibly damaged. For an alkaline electrolysis cell, a typical concentration range may, for example, be from 15 to 30 % KOH.

The energy efficiency of an electrolysis cell depends on its internal resistance. Thus the distance between positive and negative electrode of the electrolysis cell is kept small in order to have a low ohmic resistance between the electrodes. In some electrolysis cells, a typical distance is 1 mm. In an electrolysis cell with an active area of 100 cm² the electrolyte volume inside the cell is 10 ccm. At a current density of 200 mA/cm² about 6 to 7 ccm of water are consumed by the electrolysis cell per hour. Therefore, the electrolyte in some cells may be pumped from a reservoir through the cell in order to keep the cell's electrolyte concentration in the proper range. The size of the reservoir determines the operating time of the electrolysis system. The electrolyte flow that has to be pumped through the cell depends on the concentration of the electrolyte in the reservoir. For example, assuming that the highest accepted concentration is 30 %, one has to replace the electrolyte in the electrolysis cell 5 times per hour at a starting concentration of 15 % and 68 times per hour at a starting concentration of 29 %. This means that the electrolyte flow that has to be pumped through the cell is between 50 and 680 ccm per hour.

The gas diffusion electrodes that are used in some electrolysis cells for generating the reaction gases work best with a small differential pressure between the reaction gases and the electrolyte, with the electrolyte pressure being lower than the gas pressure. One has to take care about the differential pressure when pumping electrolyte through the cell. For the same reason the electrolyte pressure has to be quite constant all over the cell and the pressure drop caused by the flow resistance has to be small. For example, typical operation pressures of electrolysis cells may be 0.5 to 3 bars and the electrolyte pressure may also have to be that high for proper cell operation.

Usually, the electrolyte is pumped by conventional pumps such as, for example, rotary pumps, gear type pumps, piston pumps or membrane pumps. However, in an efficient electrolysis system these pumps may offer one or more limitations, including for example, problems with handling low flow rates and/or high pressure flows and problematic power consumption.

An example of a system for producing hydrogen and oxygen by electrolysis of water and that includes a water pump is described in JP 09 157878.

### SUMMARY OF THE INVENTION

In accordance with one aspect of the present invention, there is provided a system for pumping electrolyte through an electrolysis cell for generating a gas characterized in that the system further includes:
an electrolyte reservoir connected via an inlet conduit to receive electrolyte from the electrolysis cell; and
a pumping chamber connected via an outlet conduit to flow electrolyte to and through the electrolysis cell, the pumping chamber being in fluid connection with the electrolyte reservoir whereby it may be supplied with electrolyte, wherein
at least a portion of the gas generated by the electrolysis cell is supplied to the pumping chamber and a pressure of the at least a portion of the gas is used as driving force for the pumping of electrolyte from the pumping chamber to and through the electrolysis cell.

It is to be understood that other aspects of the present invention will become readily apparent to those skilled in the art from the following detailed description, wherein various embodiments of the invention are shown and described by way of illustration. As will be realized, the invention is capable for other and different embodiments and its several details are capable of modification in various other respects, all without departing from the spirit and scope of the present invention. Accordingly the drawings and detailed description are to be regarded as illustrative in nature and not as restrictive.

### BRIEF DESCRIPTION OF THE DRAWINGS

Referring to the drawings wherein like reference numerals indicate similar parts throughout the several views, several aspects of the present invention are illustrated by way of example, and not by way of limitation, in detail in the figures, wherein:
Figure 1 is a schematic block diagram of an electrolysis cell and electrolyte pumping system according to one aspect of the present invention;
Figure 2 is a schematic block diagram of an electrolysis cell and electrolyte pumping system according to another aspect of the present invention;
Figure 3 is a schematic block diagram of an electrolysis cell and electrolyte pumping system according to another aspect of the present invention;
Figure 4 is a schematic block diagram of an electrolysis cell and electrolyte pumping system according to another aspect of the present invention; and
Figure 5 is a schematic block diagram of an electrolysis cell and electrolyte pumping system according to another aspect of the present invention.

### DETAILED DESCRIPTION OF THE INVENTION

The detailed description set forth below in connection with the appended drawings is intended as a description of various embodiments of the present invention. The detailed description includes specific details for the purpose of providing a comprehensive understanding of the present invention.

The present invention relates to a system for pumping electrolyte through an electrolysis cell by using the pressure of at least one of the reaction gases generated by the cell itself. The present invention may also relate to an electrolysis system that couples the pressures of the generated gases with the pressure of the electrolyte.

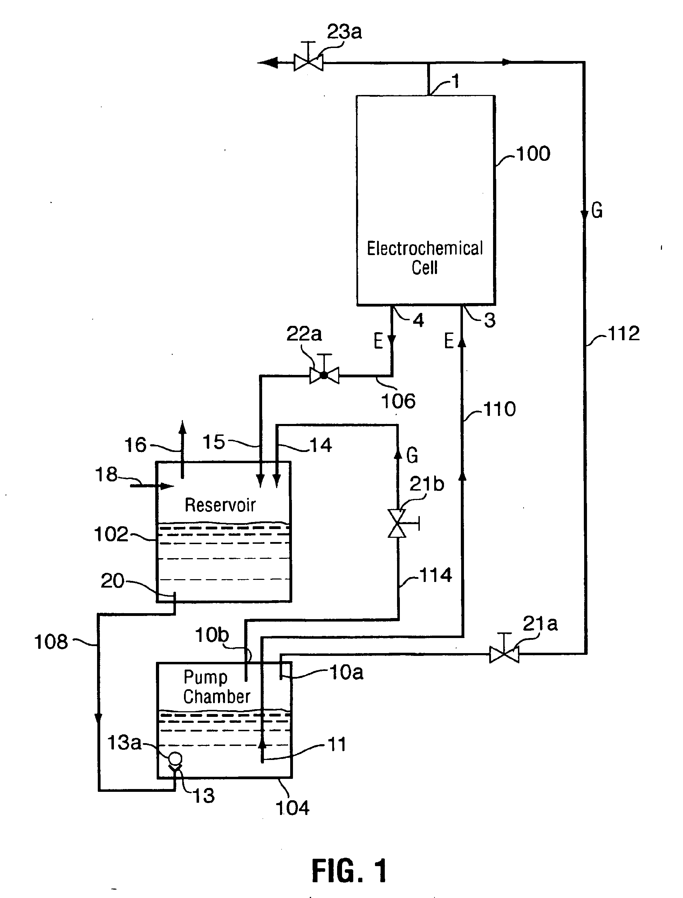

The present invention uses the pressure of reaction gas generated by the electrolysis cell to cause pumping of electrolyte through the cell. With reference to Figure 1, a pumping system according to the present invention includes an electrolysis cell 100, an electrolyte reservoir 102 and an electrolyte pumping chamber 104. In operation, pumping chamber 104 may be positioned lower, as determined by gravity, than electrolyte reservoir 102.

The electrolysis cell, the electrolyte reservoir and the pumping chamber are connected by electrolyte conduits in a circuit so that an electrolyte flow circuit, arrows E, may be set up wherein electrolyte may flow through a conduit 106 from the cell to the reservoir, then through a conduit 108 from the reservoir to the pumping chamber and then through a conduit 110 back to the cell. Also, the pumping chamber 104 may be connected to both the cell and the reservoir by reaction gas conduits 112, 114 respectively to permit pumping of electrolyte using the flow of generated gas, arrows G, as will be explained in greater detail below.

The electrolysis cell has at least one outlet 1 for the reaction gases, an electrolyte inlet 3 and an electrolyte outlet 4. The reservoir may have an electrolyte inlet 15 that is connected through conduit 106 to the electrolyte outlet 4 of the electrolysis cell. The pumping chamber may have a gas inlet 10a that is connected via conduit 112 and a valve 21 a to the cell reaction gas outlet 1 and a gas outlet 10b that is connected via conduit 114 and another valve 21 b to a gas inlet 14 of the reservoir chamber. The pumping chamber may also have an electrolyte outlet 11 that is connected to the electrolyte inlet of the electrolysis cell 3 and an electrolyte inlet 13 that is connected to an electrolyte outlet 20 of the reservoir through the gas flow conduits. Valves 21a, 21b are coordinated, as, for example, by use of a switch, communication or control, such that only one of the valves can be open at any one time so that the pumping chamber is either in gas communication with the reservoir or in gas communication with the electrolysis cell 100.

An electrolysis cell starts to generate gases generally as soon as a sufficient voltage is applied. In operation of a system according to Figure 1, for example, a gas pressure is generated once cell 100 begins operation. In the described system, when valve 21 a is open a portion of the generated reaction gas from cell 100 flows into the pumping chamber, where the pressure thereby also increases. Due to the increasing gas pressure, the electrolyte in the pumping chamber is also pressurized and driven out, and thus pumped out, of pumping chamber 104 to inlet 3, then through the electrolysis cell, out through outlet 4 and back to the reservoir through conduit 106 and the reservoir's electrolyte inlet 15. If the valves 21 a, 21 b are switched, so that valve 21 a is closed and valve 21b is opened, the connection between the electrolysis cell and the pumping chamber is interrupted and no further gas from the cell can reach the pumping chamber. Instead, with valve 21b open, the pumping chamber is now connected to the gas inlet 14 of the electrolyte reservoir through conduit 114 and renders pumping chamber 104 and electrolyte reservoir 102 pressure equilibrated. As such, electrolyte may flow from the reservoir to the pumping chamber through conduit 108 due to gravity.

While the flow of electrolyte from reservoir 102 to pumping chamber 104 may be accomplished by gravity, other flows such as from the pumping chamber back to the cell may be positively driven by pumping drive generated from the use of reaction gas and, as such, need not require positioning to act ' on gravity.

The reservoir, being connected to the electrolysis cell by conduit 106 from outlet 4, may continue to fill with electrolyte that is passing, as for example by residual pumping pressure through the cell and/or by electrolyte that is draining along conduit 106.

While the reservoir fills the pumping chamber with electrolyte, the electrolysis cell can remain in operation and can continue to generate gas. When the valves are switched back, to open valve 21 a and close valve 21b, pumping chamber 104 may be substantially immediately pressurized again, the electrolyte flow from the reservoir to the pumping chamber stops and electrolyte is pumped to and through the electrolysis cell again. This cyclic operation can be used to pump electrolyte through the system.

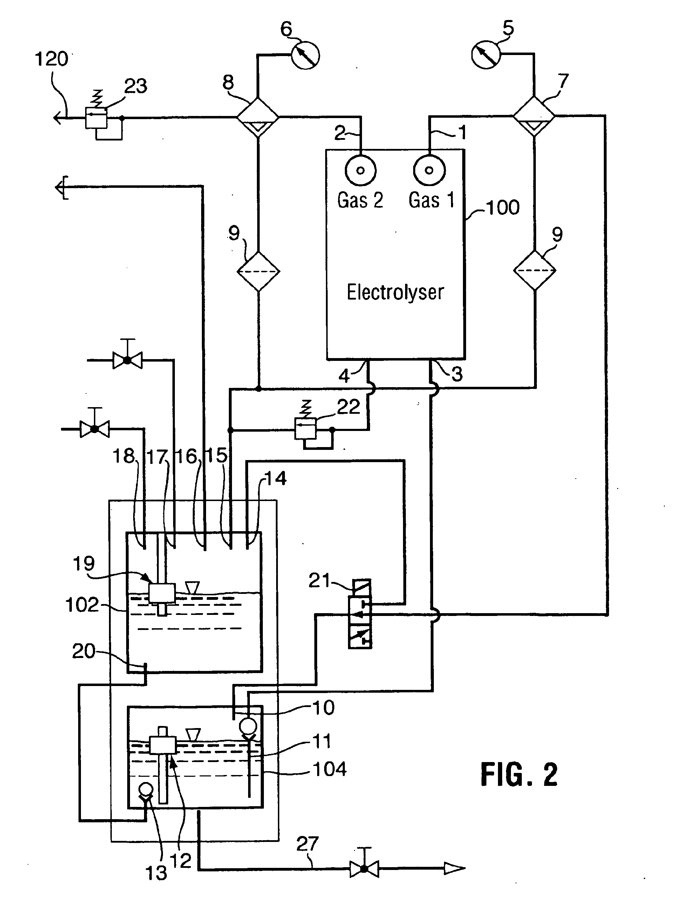

One or more valves, such as valve 13a at inlet 13 and or valve 11 a at pump chamber outlet 11 (Figure 2), can be provided to control the direction of flow of gas or liquid, where desired or needed. Such valves can be check valves or positively driven valves as desired. Where valves 13a, 11 a, etc. are positively driven, their opening and closing may have to be coordinated with valves 21 a, 21 b in order to permit appropriate operation of the system.

As the system uses an alternating and coordinated opening and closing of valves 21 a, 21 b, it may be desirable to use a connected valve, such as a 3/2 way valve so that the opening of one valve automatically closes the other. Switching between valves 21 a, 21 b can be controlled by controllers such as, for example, level sensors, timers, etc. as desired. Such a system may also be useful for other valves in the system for which opening and closing needs to be coordinated.

As may be appreciated, it may be possible to reduce the numbers of conduits between the components by combining the conduits adjacent gas inlet 10a and the gas outlet 10b into one conduit, as gas flow will only be in one direction at one time, as controlled by valves 21 a, 21 b.

It is usually desired to have the reaction gases available for use at a particular pressure for example 0.5 to 3 bar and in a closed electrolysis system it is desirable to maintain the electrolyte and reaction gases with a small differential pressure. In the illustrated embodiment, cell 100 may operate under a pressure greater than ambient and optimal system operation may be dependent on maintaining the gas and electrolyte differential pressure. Thus, care may be taken for the balance of the absolute pressure of the system. In particular, it is noted that in some embodiments the reservoir may be at ambient pressures, while the generated reaction gases and electrolyte in the cell may be at significantly higher pressures and it may be desirable to control pressure in the pumping system to avoid adverse differential pressures through the system. Pressure control may be achieved by use of pressure control devices 22a, 23a such as electrolyte flow resistors, controls, valves, etc. and/or reaction gas flow resistors, controls, valves, etc. Selection of these pressure control devices and positioning thereof may be used to couple directly the pressures of at least the pumping portion of the generated gases with the pressure of the electrolyte so that an operationally acceptable differential pressure is maintained in the cell.

The illustrated system permits the water, which is consumed during electrolysis, to be replenished to adjust the electrolyte concentration without opening cell 100. For example, an electrolyte/water refill inlet 18 may be provided in the system in either the pumping chamber or the reservoir, as desired. In some embodiments, the refill inlet may be positioned to permit introduction of liquid to the system without shutting the system down. In one embodiment, the refill may be positioned in the reservoir which operates open to atmosphere.

Thus, in view of the foregoing, an electrolysis cell electrolyte pumping system is provided wherein the pressure of at least a portion of the gas generated by the electrolysis cell is used as driving force for the pumping of the electrolyte. In one embodiment, the electrolyte pressure is coupled with the pressure of the pumping gas in such a way that the differential pressure between the electrolyte and the gas is as high as that differential pressure selected for the operation of the electrolysis cell. Where the cell generates two reaction gases separately, the pressures of both reaction gases may also be coupled in such a way that the differential pressure between the two gases is as high as that differential pressure selected for the operation of the electrolysis cell.

The present pumping system for electrolysis cells can be realized in different ways as described in the following examples. The following examples show various components of the system and it should be appreciated that such components may be used alone or in combination, as desired, to provide an operational system with various selected attributes.

### EXAMPLE 1

Figure 2 shows one example electrolysis system that employs a first portion of the reaction gas from electrolysis cell 100 for pumping and provides a second portion of the reaction gas to a user through line 120 for an application other than pumping the electrolyte. In this particular embodiment, the system actually generates two gasses with the first gas (gas 1) being used for pumping and the second gas (gas 2) passed for use/collection by the user. In one embodiment, the system may be selected to generate oxygen as gas 1 and hydrogen as gas 2. However, formation of other reaction gasses may be of interest in an electrolysis system.

After use for pumping, gas 2 is emitted to the environment, as indicated at outlet 16. Thus, the electrolyte reservoir 102 is not pressurized in this example.

In this embodiment, it is desirable that the electrolyte pressure in the electrolysis cell be kept quite constant for optimal conditions of gas diffusion electrodes in the cell. Therefore, the electrolyte outlet 4 of the electrolysis cell isn't connected directly to the inlet 15 of the reservoir inlet, since if it were, the ambient pressure in the reservoir would be communicated to the outlet 4 which would generate an electrolyte pressure close to the pressure of gas 1 at the inlet 3 and close to ambient pressure at the outlet 4. In that case, the pressure drop between electrolyte inlet and outlet of the electrolysis cell would be close to the pressure of gas 1. Hence, an adjustable flow resistor 22 is used between the electrolysis cell and the reservoir. In Figure 2, a primary pressure valve is shown but flow resistor 22 could also be embodied in different ways, for example, as through the use of a needle valve. The flow resistance has to be adjusted so that the electrolyte pressure at the outlet of the electrolysis cell is almost as high as at the inlet. The pressure of reaction gas 2 is also regulated by a primary pressure valve 23 and may have to be adjusted to the pressure of gas 1.

A 3/2 way valve 21 is provided to control gas flow into and out of pumping chamber 104 through gas port 10. Valve 21 is switched by a liquid level switch 12. Using liquid level switch 12, as soon as the electrolyte in the pumping chamber is sensed as being at a low level, valve 21 is switched to refill mode, which connects pumping chamber gas port 10 and reservoir gas inlet 14. When switch 12 senses that the electrolyte level is at a high level, it signals valve 21 to switch to a pumping mode, wherein pumping chamber gas port 10 and gas outlet 1 of electrolysis cell are connected.

The pressures of the two reaction gases and the electrolyte are not cooperatively coupled since the reservoir, and any gas 1 flowing therein, is open to atmosphere. Thus, the pressures of the reaction gases and the electrolyte are not directly coupled but are controlled individually and may have to be monitored in order to be adjusted on each other to maintain an operationally acceptable pressure differential in the cell. Monitoring can be for example by use of pressure sensors 5, 6.

Of course, the system can include other operational components to facilitate operation such as, for example, one or more of strippers and filters 7, 8, 9 for removing entrained electrolyte from gas flows and returning it to electrolyte flow lines, a venting inlet 17, an electrolyte/water fill inlet 18, an electrolyte level switch 19, as may be useful for indicating when the system requires a water refill and a drain 27.

### EXAMPLE 2

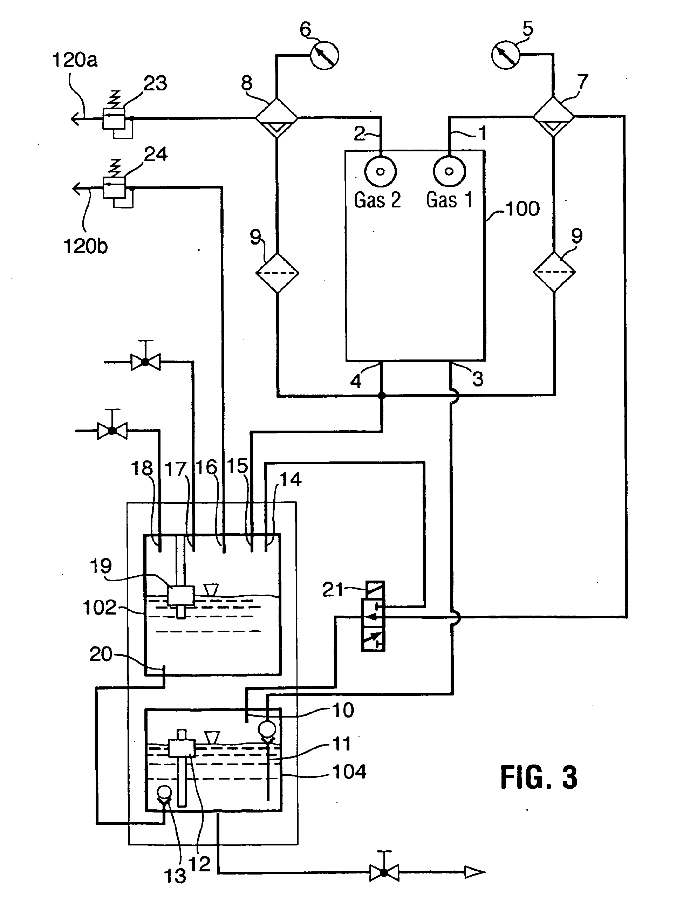

Figure 3 shows schematically a system that is similar to the one described ) in Example 1 but makes two reaction gases (gas 1 and gas 2) available to a user through lines 120a, 120b. In this embodiment, the pressure of reaction gas 1 is also regulated by a primary pressure valve 24. Thus, the electrolyte in the reservoir is pressurized and a flow resistor, such as the flow resistor 22 of example 1 is not needed. The pressure difference used for the electrolyte pumping is generated while the pumping chamber is refilled from the reservoir.

In this embodiment, the pressure of the pumping gas (gas 1) and the electrolyte are directly coupled. Thus, only the pressures of the two gases have to be monitored and adjusted on each other to control pressure differentials through the electrolysis cell.

### EXAMPLE 3

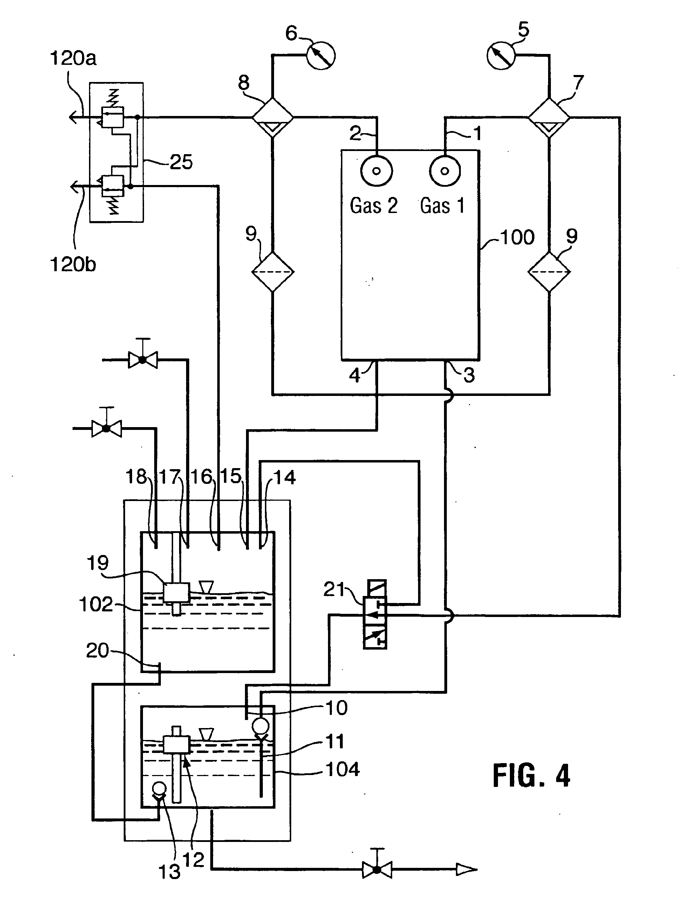

Figure 4 shows a system where the pressures of the two reaction gases are also coupled. Thus, instead of the two primary pressure valves, indicated as 23, 24 in Figure 3, a differential pressure valve 25 is used. Thus only the pressure of gas 1 has to be monitored and the pressure differences between gas 1 and gas 2 and between gas 1 and the electrolyte are fixed.

### EXAMPLE 4

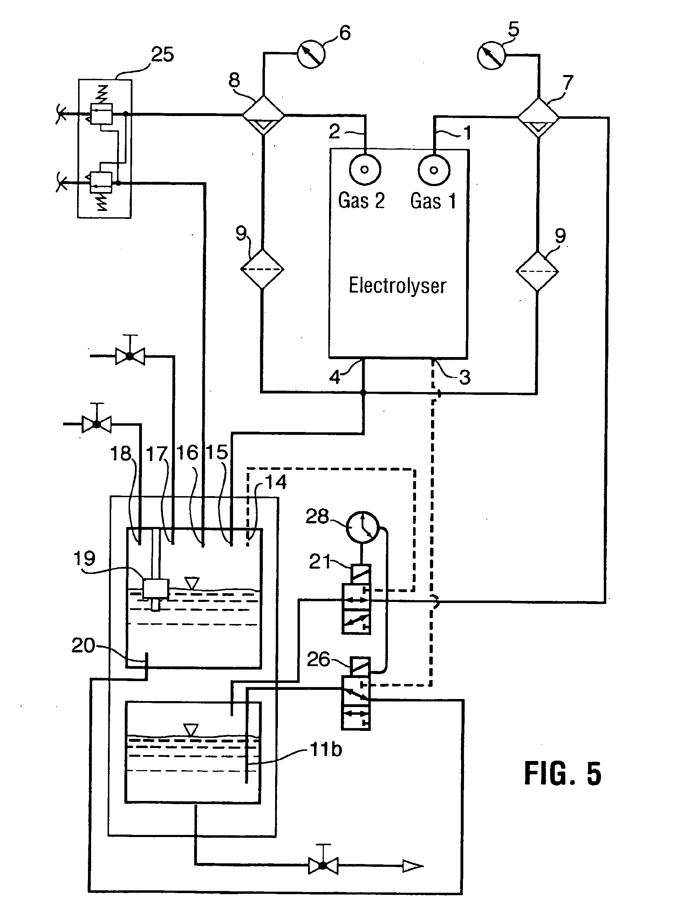

The system shown in Figure 5 differs from the system of Example 3 in the way in which the 3/2 way valve 21 is switched. In particular, instead of using a liquid level switch to trigger valve 21 the triggering is done by a timer 28. In addition, the check valves 13a, 11 a at the electrolyte inlet 13 and outlet 11 of pumping chamber 104 are replaced by another 3/2 way valve 26 also triggered by timer 28. Valve 26 is capable of switching between a first connection between an electrolyte port 11 b of the pumping chamber and electrolysis cell electrolyte inlet 3 and a second connection between pumping chamber port 11 b and reservoir electrolyte outlet 20.

The previous description of the disclosed embodiments and examples is provided to enable any person skilled in the art to make or use the present invention. Various modifications to those embodiments will be readily apparent to those skilled in the art, and the generic principles defined herein may be applied to other embodiments without departing from the spirit or scope of the invention. Thus, the present invention is not intended to be limited to the embodiments shown herein, but is to be accorded the full scope consistent with the claims, wherein reference to an element in the singular, such as by use of the article "a" or "an" is not intended to mean "one and only one" unless specifically so stated, but rather "one or more". All structural and functional equivalents to the elements of the various embodiments described throughout the disclosure that are known or later come to be known to those of ordinary skill in the art are intended to be encompassed by the elements of the claims. Moreover, nothing disclosed herein is intended to be dedicated to the public regardless of whether such disclosure is explicitly recited in the claims. Specifically with respect to the United States, no claim element is to be construed under the provisions of 35 USC 112, sixth paragraph, unless the element is expressly recited using the phrase "means for" or "step for".

## Claims

1. A system for pumping electrolyte through an electrolysis cell (100) for generating a gas **characterized in that** the system further includes:
an electrolyte reservoir (102) connected via an inlet conduit (106) to receive electrolyte from the electrolysis cell (100); and
a pumping chamber (104) connected via an outlet conduit (110) to flow electrolyte to and through the electrolysis cell (100), the pumping chamber (104) being in fluid connection with the electrolyte reservoir (102) whereby it may be supplied with electrolyte, wherein
at least a portion of the gas generated by the electrolysis cell (100) is supplied to the pumping chamber (104) and a pressure of the at least a portion of the gas is used as driving force for the pumping of electrolyte from the pumping chamber (104) to and through the electrolysis cell (100).

2. The system according to claim 1 further comprising a pressure valve (22a, 23a) wherein the electrolysis cell includes an electrolyte pressure and wherein the at least a portion of the gas generated includes a pumping gas pressure and wherein the electrolyte pressure is coupled via said valve (22a, 23a) with the pumping gas pressure in such a way that any differential pressure between the electrolyte and the at least a portion of the gas generated is as high as that differential pressure selected for operation of the electrolysis cell.

3. The system according to claim 2 wherein the pressure valve (23a) is set to regulate the pumping gas pressure.

4. The system according to claim 2 further comprising a differential pressure valve (25) wherein the at least a portion of the gas generated is a first gas and the electrolysis cell generates a second gas and wherein the differential pressure valve (25) regulates the pressures of both the first gas and the second gas so that the differential pressure between the two gases is as high as that differential pressure selected for the operation of the electrolysis cell.

5. The system according to claim 1 wherein the at least a portion of the gas generated is pressure controlled to maintain an operational gas pressure within the electrolysis cell (100).

6. The system according to claim 2 wherein the flow of electrolyte through the electrolysis cell (100) has an electrolyte pressure and is pressure controlled to maintain an operational electrolyte pressure within the electrolysis cell.

7. The system according to claim 6 wherein the electrolyte pressure is pressure controlled using a flow resistor (22a) in the inlet conduit (106) between the electrolysis cell (100) and the electrolyte reservoir (102).

8. The system according to claim 6 wherein the at least a portion of the gas generated has a gas pressure and is pressure controlled to maintain an operational gas pressure within the electrolysis cell (100) and the gas pressure of the at least a portion of the gas generated is monitored and adjusted against the electrolyte pressure to maintain an operational pressure differential within the electrolysis cell (100).

9. The system according to claim 6 wherein the at least a portion of the gas generated has a gas pressure and the gas pressure is directly coupled to the electrolyte pressure using a flow resistor such that any differential pressure between the electrolyte and the at least a portion of the gas generated is as high as that differential pressure selected for operation of the electrolysis cell.

10. The system according to claim 1 further comprising a pressure control (22) in the inlet conduit (106) and a pressure control in the outlet conduit (110) to pressure isolate the electrolyte of the electrolysis cell from the electrolyte reservoir (102) and from the pumping chamber (104).

11. The system according to claim 1 wherein the electrolyte reservoir is pressure isolatable from the pumping chamber.

12. The system according to claim 1 wherein the electrolysis cell (100) generates a second gas portion, which is passed to an application other than pumping the electrolyte.

13. The system according to claim 1 wherein the electrolysis cell (100) operates at an elevated pressure greater than ambient and the system operates to pump electrolyte from the pumping chamber (104) while maintaining the elevated pressure in the electrolysis cell (100).

14. The system according to claim 1 wherein the at least a portion of the gas generated is applied to an electrolyte pumping chamber (104) to elevate the pressure of the electrolyte therein and force it into the electrolysis cell (100).

15. The system according to claim 13 wherein the electrolyte reservoir (102) passes the electrolyte to the electrolyte pumping chamber (104) when pressures are equalized between the electrolyte pumping chamber (104) and the electrolyte reservoir (102).

16. The system according to claim 14 wherein the at least a portion of the gas generated has a gas pressure and the gas pressure is communicated to, and regulated to be substantially maintained in, the electrolyte pumping chamber (104) and the electrolyte reservoir (100) to maintain an operational pressure differential between the electrolyte and the at least a portion of the gas generated within the electrolysis cell.

## Patentansprüche

1. System zum Pumpen von Elektrolyt durch eine Elektrolysezelle (100) zum Erzeugen eines Gases, **dadurch gekennzeichnet, dass** das System des Weiteren enthält:
einen Elektrolytspeicher (102), der über eine Eingangsleitung (106) angeschlossen ist, zum Aufnehmen von Elektrolyt aus der Elektrolysezelle (100); und
eine Pumpkammer (104), die über eine Ausgangsleitung (110) angeschlossen ist, um Elektrolyt zu der und durch die Elektrolysezelle (100) strömen zu lassen, wobei die Pumpkammer (104) in Flüssigkeitsverbindung mit dem Elektrolytspeicher (102) steht, wodurch dieser Elektrolyt zugeführt werden kann, wobei
mindestens ein Anteil des durch die Elektrolysezelle (100) erzeugten Gases der Pumpkammer (104) zugeführt wird und der Druck dieses mindestens einen Anteils des Gases als Antriebskraft für das Pumpen des Elektrolyts aus der Pumpkammer (104) zu der und durch die Elektrolysezelle (100) verwendet wird.

2. System gemäß Anspruch 1, des Weiteren umfassend ein Druckventil (22a, 23a), wobei die Elektrolysezelle einen Elektrolytdruck enthält und wobei der mindestens eine Anteil des erzeugten Gases einen Pumpgasdruck enthält und wobei der Elektrolysedruck über das Ventil (22a, 23a) auf eine solche Weise mit dem Pumpgasdruck gekoppelt ist, dass jeder Differenzdruck zwischen dem Elektrolyt und dem mindestens einen Anteil des erzeugten Gases so hoch ist wie der Differenzdruck, der für den Betrieb der Elektrolysezelle ausgewählt wird.

3. System gemäß Anspruch 2, wobei das Druckventil (23a) zur Regelung des Pumpgasdrucks eingestellt wird.

4. System gemäß Anspruch 2, des Weiteren umfassend ein Differenzdruckventil (25), wobei der mindestens eine Anteil des erzeugten Gases ein erstes Gas ist und die Elektrolysezelle ein zweites Gas erzeugt und wobei das Differenzdruckventil (25) den Druck sowohl des ersten Gases als auch des zweiten Gases so regelt, dass der Differenzdruck zwischen den beiden Gasen so hoch ist wie der Differenzdruck, der für den Betrieb der Elektrolysezelle ausgewählt wird.

5. System gemäß Anspruch 1, wobei der mindestens eine Anteil des erzeugten Gases druckgeregelt ist, um einen Betriebsgasdruck innerhalb der Elektrolysezelle (100) aufrechtzuerhalten.

6. System gemäß Anspruch 2, wobei die Strömung des Elektrolyts durch die Elektrolysezelle (100) einen Elektrolytdruck hat und druckgeregelt ist, um einen Betriebselektrolytdruck innerhalb der Elektrolysezelle aufrechtzuerhalten.

7. System gemäß Anspruch 6, wobei die Druckregelung des Elektrolytdrucks mithilfe eines Strömungswiderstands (22a) in der Eingangsleitung (106) zwischen der Elektrolysezelle (100) und dem Elektrolytspeicher (102) erfolgt.

8. System gemäß Anspruch 6, wobei der mindestens eine Anteil des erzeugten Gases einen Gasdruck hat und druckgeregelt ist, um einen Betriebsgasdruck innerhalb der Elektrolysezelle (100) aufrechtzuerhalten, und wobei der Gasdruck des mindestens einen Anteils des erzeugten Gases überwacht und im Verhältnis zum Elektrolytdruck justiert wird, um eine Betriebsdruckdifferenz innerhalb der Elektrolysezelle (100) aufrechtzuerhalten.

9. System gemäß Anspruch 6, wobei der mindestens eine Anteil des erzeugten Gases einen Gasdruck hat und der Gasdruck mithilfe eines Strömungswiderstands direkt an den Elektrolytdruck gekoppelt ist, sodass jede Druckdifferenz zwischen dem Elektrolyt und dem mindestens einen Anteil des erzeugten Gases so hoch ist wie die Druckdifferenz, die für den Betrieb der Elektrolysezelle ausgewählt wird.

10. System gemäß Anspruch 1, des Weiteren umfassend eine Druckregelung (22) in der Eingangsleitung (106) und eine Druckregelung in der Ausgangsleitung (110), um eine Druckisolierung des Elektrolyts der Elektrolysezelle von dem Elektrolytspeicher (102) und von der Pumpkammer (104) zu erzielen.

11. System gemäß Anspruch 1, wobei bei dem Elektrolytspeicher eine Druckisolierung von der Pumpkammer möglich ist.

12. System gemäß Anspruch 1, wobei die Elektrolysezelle (100) einen zweiten Gasanteil erzeugt, der einer anderen Anwendung als dem Pumpen des Elektrolyts zugeführt wird.

13. System gemäß Anspruch 1, wobei die Elektrolysezelle (100) mit einem erhöhten Druck betrieben wird, der größer als der Umgebungsdruck ist, und das System betrieben wird, um Elektrolyt aus der Pumpkammer (104) herauszupumpen, während der erhöhte Druck in der Elektrolysezelle (100) aufrechterhalten wird.

14. System gemäß Anspruch 1, wobei der mindestens eine Anteil des erzeugten Gases an eine Elektrolytpumpkammer (104) angelegt wird, um den Druck des darin befindlichen Elektrolyts zu erhöhen und es in die Elektrolysezelle (100) zu pressen.

15. System gemäß Anspruch 13, wobei der Elektrolytspeicher (102) das Elektrolyt der Elektrolytpumpkammer (104) zuführt, wenn die Drücke zwischen der Elektrolytpumpkammer (104) und dem Elektrolytspeicher (102) angeglichen sind.

16. System gemäß Anspruch 14, wobei der mindestens eine Anteil des erzeugten Gases einen Gasdruck hat und der Gasdruck zu der Elektrolytpumpkammer (104) kommuniziert und so geregelt wird, dass er im Wesentlichen darin aufrechterhalten wird, und zum Elektrolytspeicher (100) kommuniziert wird, um eine Betriebsdruckdifferenz zwischen dem Elektrolyt und dem mindestens einen Anteil des erzeugten Gases innerhalb der Elektrolysezelle aufrechtzuerhalten.

## Revendications

1. Un système de pompage d'un électrolyte au travers d'une cellule électrolytique (100) destiné à générer un gaz **caractérisé en ce que** le système comprend en outre :
un réservoir d'électrolyte (102) raccordé par l'intermédiaire d'un conduit d'adduction (106) de façon à recevoir un électrolyte provenant de la cellule électrolytique (100), et
une chambre de pompage (104) raccordée par l'intermédiaire d'un conduit d'évacuation (110) de façon à faire s'écouler l'électrolyte vers et au travers de la cellule électrolytique (100), la chambre de pompage (104) étant en communication fluidique avec le réservoir d'électrolyte (102), grâce à quoi elle peut être alimentée avec un électrolyte, où
au moins une partie du gaz généré par la cellule électrolytique (100) est fournie à la chambre de pompage (104) et une pression de la au moins une partie du gaz est utilisée en tant que force d'entraînement pour le pompage de l'électrolyte à partir de la chambre de pompage (104) vers et au travers de la cellule électrolytique (100).

2. Le système selon la Revendication 1 comprenant en outre une soupape de pression (22a, 23a) où la cellule électrolytique comprend une pression d'électrolyte et où la au moins une partie du gaz généré comprend une pression de gaz de pompage et où la pression d'électrolyte est couplée par l'intermédiaire de ladite soupape (22a, 23a) à la pression de gaz de pompage de telle manière que toute pression différentielle entre l'électrolyte et la au moins une partie du gaz généré est aussi élevée que la pression différentielle sélectionnée pour le fonctionnement de la cellule électrolytique.

3. Le système selon la Revendication 2 où la soupape de pression (23a) est réglée de façon à réguler la pression de gaz de pompage.

4. Le système selon la Revendication 2 comprenant en outre une soupape de pression différentielle (25) où la au moins une partie du gaz généré est un premier gaz et la cellule électrolytique génère un deuxième gaz et où la soupape de pression différentielle (25) régule les pressions à la fois des premier et deuxième gaz de sorte que la pression différentielle entre les deux gaz soit aussi élevée que la pression différentielle sélectionnée pour le fonctionnement de la cellule électrolytique.

5. Le système selon la Revendication 1 où la au moins une partie du gaz généré est contrôlée en pression de façon à conserver une pression de gaz opérationnelle à l'intérieur de la cellule électrolytique (100).

6. Le système selon la Revendication 2 où l'écoulement de l'électrolyte au travers de la cellule électrolytique (100) présente une pression d'électrolyte et est contrôlé en pression de façon à conserver une pression de gaz opérationnelle à l'intérieur de la cellule électrolytique (100).

7. Le système selon la Revendication 6 où la pression d'électrolyte est contrôlée en pression au moyen d'un dispositif de résistance à l'écoulement (22a) dans le conduit d'adduction (106) entre la cellule électrolytique (100) et le réservoir d'électrolyte (102).

8. Le système selon la Revendication 6 où la au moins une partie du gaz généré présente une pression de gaz et est contrôlée en pression de façon à conserver une pression de gaz opérationnelle à l'intérieur de la cellule électrolytique (100) et la pression de gaz de la au moins une partie du gaz généré est surveillée et ajustée en fonction de la pression d'électrolyte de façon à conserver une pression opérationnelle différentielle à l'intérieur de la cellule électrolytique (100).

9. Le système selon la Revendication 6 où la au moins une partie du gaz généré présente une pression de gaz et la pression de gaz est directement couplée à la pression d'électrolyte au moyen d'un dispositif de résistance à l'écoulement de telle manière que toute pression différentielle entre l'électrolyte et la au moins une partie du gaz généré est aussi élevée que la pression différentielle sélectionnée pour le fonctionnement de la cellule électrolytique.

10. Le système selon la Revendication 1 comprenant en outre un régulateur de pression (22) dans le conduit d'adduction (106) et un régulateur de pression dans le conduit d'évacuation (110) de façon à isoler en pression l'électrolyte de la cellule électrolytique du réservoir d'électrolyte (102) et de la chambre de pompage (104).

11. Le système selon la Revendication 1 où le réservoir d'électrolyte est isolable en pression de la chambre de pompage.

12. Le système selon la Revendication 1 où la cellule électrolytique (100) génère une deuxième partie de gaz, qui est transmise à une application autre que le pompage de l'électrolyte.

13. Le système selon la Revendication 1 où la cellule électrolytique (100) fonctionne à une pression élevée supérieure à la pression ambiante et le système fonctionne de façon à pomper l'électrolyte de la chambre de pompage (104) tout en conservant la pression élevée dans la cellule électrolytique (100).

14. Le système selon la Revendication 1 où la au moins une partie du gaz généré est appliquée à une chambre de pompage d'électrolyte (104) de façon à élever la pression de l'électrolyte dans celle-ci et à la forcer à entrer dans la cellule électrolytique (100).

15. Le système selon la Revendication 13 où le réservoir d'électrolyte (102) transmet l'électrolyte à la chambre de pompage d'électrolyte (104) lorsque les pressions sont équilibrées entre la chambre de pompage d'électrolyte (104) et le réservoir d'électrolyte (102).

16. Le système selon la Revendication 14 où la au moins une partie du gaz généré présente une pression de gaz et la pression de gaz est communiquée à, et régulée de façon à être sensiblement conservée dans, la chambre de pompage d'électrolyte (104) et le réservoir d'électrolyte (100) de façon à conserver une pression opérationnelle différentielle entre l'électrolyte et la au moins une partie du gaz généré à l'intérieur de la cellule électrolytique.
